# EUROPÄISCHE PATENTANMELDUNG

(11) **EP 3 095 662 A1**
(43) Veröffentlichungstag der Anmeldung: **23.11.2016**
(21) Anmeldenummer: 16000836.3
(22) Anmeldetag: 13.04.2016
(51) Int. Cl.: B60W 40/105, B60W 20/00, B60W 20/40, F02N 11/00

(54) **VERFAHREN ZUR MODELLBASIERTEN PRÄDIKTION EINER SYSTEMGRÖSSE, WIE GESCHWINDIGKEIT ODER LADEZUSTANDES EINES ENERGIESPEICHERS EINES KRAFTFAHRZEUGS**

(30) Priorität: 19.05.2015 DE 102015006447
(71) Anmelder: MAN Truck & Bus AG, 80995 München (DE)
(72) Erfinder: Kirchensteiner, Elmar, 85256 Vierkirchen (DE); Ovari, Sebastian, 85241 Hebertshausen (DE); Günnewicht, Manuel, 81243 München (DE); Hierlmeier, Matthias, 80997 München (DE); Nuber, Johannes, 85748 Garching bei München (DE); Kerschl, Stefan, 85402 Kranzberg (DE)
(74) Vertreter: v. Bezold & Partner Patentanwälte - PartG mbB

(57) **Zusammenfassung**

Die Erfindung betrifft ein Verfahren zur modellbasierten Prädiktion einer Systemgröße eines Kraftfahrzeugs, insbesondere eines Hybridfahrzeugs, bei dem ein Wert oder Verlauf der Systemgröße auf Basis eines Systemmodells für einen vorausliegenden Streckenabschnitt in Abhängigkeit von mindestens einem Modellparameter vorhergesagt wird (S1; S21). Gemäß allgemeinen Gesichtspunkten der Erfindung wird ein tatsächlicher Wert oder Verlauf der zuvor prädizierten Systemgröße gemessen (S2; S22). In Abhängigkeit von einer Abweichung des prädizierten Werts vom gemessenen Wert der Systemgröße wird wenigstens ein die Prädiktion der Systemgröße beeinflussender Modellparameter angepasst (S4; S24) und für eine nachfolgende Prädiktion der Systemgröße verwendet, wobei der wenigstens eine Modellparameter so angepasst wird, dass der angepasste Modellparameter zu einer geringeren Abweichung des prädizierten Werts vom gemessenen Wert der Systemgröße geführt hätte.

## Beschreibung

Die Erfindung betrifft ein Verfahren zur modellbasierten Prädiktion einer Systemgröße eines Kraftfahrzeugs, insbesondere eines Hybridfahrzeugs, bei dem ein Wert oder Verlauf der Systemgröße auf Basis eines Systemmodells des Kraftfahrzeugs für einen vorausliegenden Streckenabschnitt in Abhängigkeit von mindestens einem Modellparameter vorhergesagt wird.

In den letzten Jahren haben Assistenzsysteme in Fahrzeugen vermehrt Einzug gehalten, um insbesondere Sicherheit, Effizienz und Komfort zu erhöhen. Aus der Praxis ist bekannt, dass insbesondere bei Fahrzeugen, die einen hohen Grad der Automatisierung ermöglichen, z.B. Fahrzeugen mit automatisierter Getriebesteuerung, automatisierter Längsdynamikregelung bei aktivem Tempomat, automatisierter Momentenverteilung bei Hybridfahrzeugen etc., für die Steuerverfahren vermehrt Online-Optimierungsverfahren bzw. Online-Optimierer unter Ausnutzung vorausschauender Informationen zum Einsatz kommen.

Primäres Ziel des Optimierers ist die Berechnung von Stellgrößen (Steuereingriffen), um bestimmte Zustandsgrößen bzw. Systemzustände des Fahrzeugs, wie z.B. die Fahrzeuggeschwindigkeit oder den Ladezustand des Energiespeichers, stets in ein Optimum zu überführen. Das Optimum für einen prädizierten Zustandsverlauf ist durch Zielkriterien charakterisiert. Zielkriterien sind beispielsweise die Maximierung des Kraftstoffeinsparpotentials oder die Minimierung von Geräuschemissionen unter Vorgabe weiterer Randbedingungen, z.B. einer Mindestzeit für das Durchfahren einer Fahrstrecke.

Ein Beispiel für derartige Optimierungsverfahren ist die modellbasierte prädiktive Regelung, die an sich aus dem Stand der Technik bekannt ist und seit den 70er-Jahren erfolgreich zur Regelung verschiedenster technischer Prozesse eingesetzt wird. Zum Stand der Technik betreffend die modellbasierte prädiktive Regelung wird beispielhaft auf folgende beide Veröffentlichungen verwiesen: J. M. Maciejowski. Predictive Control with Constraints. Prentice Hall, New Jersey, 2002 und James B. Rawlings. Tutorial Overview of Model Predictive Control. IEEE Control Systems Magazine, 2000.

Ferner ist aus der Praxis und dem Stand der Technik bekannt, dass die modellbasierte prädiktive Regelung in jüngerer Zeit auch vermehrt zur Online-Optimierung von Zustandsgrößen bzw. Systemgrößen von Kraftfahrzeugen, insbesondere von Hybridfahrzeugen, eingesetzt wird, um eine optimale Betriebsstrategie der Antriebsaggregate festzulegen. Um das Energiemanagement für die Antriebsaggregate zu optimieren, werten vorausschauende Algorithmen beispielsweise vorausliegende Streckendaten aus und adaptieren die Betriebsstrategie unter Berücksichtigung des prädizierten Systemverhaltens. Insbesondere die vorausschauende Kalkulation von Energieerzeugung, -bedarf und -speicherung ist ein wesentlicher Bestandteil für die Optimierung des Energiemanagements und trägt somit u. a. zur Reduzierung des Kraftstoffbedarfs bei.

Das prädiktive Systemverhalten wird mittels eines Systemmodells geschätzt. Beispielsweise wird hierbei der Antriebsstrang durch detaillierte Systemmodelle abgebildet, in die Wirkungsgradbetrachtungen, thermische Modelle und Lebensdauerbetrachtungen der Systemkomponenten etc. einfließen können.

Im Rahmen der Optimierung wird unter Verwendung eines Systemmodells somit das zukünftige dynamische Verhalten des Systemzustands über dem aktuellen Prädiktionshorizont prädiziert, d. h. vorhergesagt. Hierbei wird ausgehend von einem aktuellen Zeitpunkt und einem aktuellen Wert der Zustandsgröße(n) bzw. Systemgröße(n) unter Verwendung des Systemmodells das zukünftige dynamische Verhalten des Systemzustands über einen endlichen Prädiktionshorizont prädiziert. Die möglichen Trajektorien der zu optimierenden Zustandsgröße bzw. Systemgröße werden mit einem Zielfunktional bewertet und diejenige als Optimaltrajektorie ausgewählt, die ein vorgegebenes Gütemaß gemäß der Zielkriterien minimiert. Beispielhaft wird hierzu auf die Veröffentlichungen [1]: BACK, M.: Prädiktive Antriebsregelung zum energieoptimalen Betrieb von Hybridfahrzeugen, Universitätsverlag Karlsruhe, Diss., 2005 und [2]: BECK, R.; BOLLIG, A.; ABEL, D.: Echtzeitstrategien zum Prädiktiven Optimalen Energiemanagement in Hybridfahrzeugen. VDI-Berichte Nr. 1975 (2006), S. 557-560 verwiesen.

Die Schätzung, d. h. Vorhersage bzw. Prädizierung des Systemverhaltens mittels des Systemmodells, kann hierbei auf Basis von vergangenen, aktuellen und vorausschauenden Daten erfolgen. Der Detaillierungsgrad des Modells (Modellkomplexität) definiert die Genauigkeit der Berechnungen des Systemverhaltens - je detaillierter das Systemverhalten modelliert ist, desto exakter sind die Berechnungsergebnisse der prädizierten Systemgrößen.

Ohne eine exakte Vorhersage des Systemverhaltens kann das System nicht optimal (vorausschauend) betrieben werden. Abweichungen zwischen prädiziertem und realem Verhalten des Systems wirken sich nachteilig auf die Optimierung der Betriebsstrategie aus. Eine hohe Modellkomplexität derartiger Online-Optimierungsverfahren führt jedoch bekanntermaßen zu dem Nachteil hoher Berechnungsaufwände.

Es ist daher eine Aufgabe der Erfindung, ein Verfahren zur modellbasierten Prädiktion einer Systemgröße eines Kraftfahrzeugs bereitzustellen, mit dem die Genauigkeit der Vorhersage von Systemgrößen im Vergleich zu herkömmlichen Verfahren verbessert werden kann, ohne die Komplexität des Systemmodells erhöhen zu müssen.

Diese Aufgaben werden durch Vorrichtungen und Verfahren mit den Merkmalen der unabhängigen Ansprüche gelöst. Vorteilhafte Ausführungsformen und Anwendungen der Erfindung ergeben sich aus den abhängigen Ansprüchen und werden in der folgenden Beschreibung unter teilweiser Bezugnahme auf die Figuren näher erläutert.

Gemäß einem ersten Gesichtspunkt der Erfindung wird ein Verfahren zur modellbasierten Prädiktion einer Systemgröße eines Kraftfahrzeugs, insbesondere eines Hybridfahrzeugs, bereitgestellt, wobei mit dem Verfahren ein Wert oder Verlauf der Systemgröße auf Basis eines Systemmodells für einen vorausliegenden Streckenabschnitt in Abhängigkeit von mindestens einem Modellparameter, nachfolgend auch als Funktionsparameter bezeichnet, vorhergesagt wird. Unter einer Systemgröße, auch als Zustandsgröße bezeichnet, wird in diesem Dokument irgendeine Zustandsgröße des Kraftfahrzeugs beschrieben, die mittels einer modellbasierten Prädiktion vorhergesagt wird. Das Verfahren ist insbesondere ein Verfahren zur Online-Prädiktion einer Systemgröße, d. h., die Systemgröße wird im Fahrbetrieb des Kraftfahrzeugs fortlaufend in kurzen Zeitabständen vorhergesagt. Derartige Verfahren werden im Rahmen von Online-Optimierungsverfahren, wie eingangs beschrieben, verwendet, wobei eine optimale Betriebsstrategie der Antriebs- und Nebenaggregate des Kraftfahrzeugs in Abhängigkeit von prädizierten Systemgrößen festgelegt werden kann.

Erfindungsgemäß wird ein tatsächlicher Wert oder Verlauf der zuvor prädizierten Systemgröße gemessen. Anschließend wird in Abhängigkeit von einer Abweichung des prädizierten Werts der Systemgröße von dem gemessenen Wert der Systemgröße wenigstens ein die Prädiktion der Systemgröße beeinflussender Modellparameter angepasst und für eine nachfolgende Prädiktion der Systemgröße verwendet. Hierbei wird der wenigstens eine Modellparameter so angepasst, dass der angepasste Modellparameter zu einer geringeren Abweichung des prädizierten Werts vom gemessenen Wert der Systemgröße geführt hätte. Wenn beispielsweise ein niedriger Wert des Modellparameters zu einer kleineren Abweichung geführt hätte, weist der angepasste Modellparameter einen niedrigeren Wert auf. Hätte dagegen ein höherer Wert des Modellparameters zu einer kleineren Abweichung geführt, ist der Modellparameter für die nachfolgende Prädiktion der Systemgröße zu erhöhen.

Die Erfindung umfasst also die allgemeine technische Lehre, die Systemgröße nicht nur vorherzusagen, d. h. zu schätzen, sondern die Systemgröße anschließend auch zu messen und eine Abweichung zwischen geschätzter und gemessener Systemgröße zur Adaption bzw. Korrektur eines Modellparameters zu nutzen, um die Genauigkeit der Vorhersage der Systemgröße für nachfolgende Berechnungsschritte zu optimieren. Über eine Rückkopplung auf Basis des tatsächlich gemessenen Werts der zuvor prädizierten Systemgröße wird somit eine Online-Adaption der modellbasierten Prädiktion ermöglicht und folglich ein Verfahren zur online-adaptierten, modellbasierten Prädiktion einer Systemgröße eines Kraftfahrzeugs bereitgestellt.

Ein Vorteil der Erfindung besteht somit darin, dass negative Einflüsse durch Modellierungsungenauigkeiten sowie die Systemmodellkomplexität reduziert werden können, da Modellierungsungenauigkeiten oder Abweichungen von den Modellierungsannahmen nachträglich automatisch durch eine Online-Adaption der Modellparameter korrigiert werden können. Dadurch kann die Genauigkeit der Vorhersage des Systemverhaltens erhöht werden und in Folge dessen eine optimierte Betriebsstrategie durch das Energiemanagement (unter verschiedensten Randbedingungen) ermöglicht werden - bei gleichbleibendem oder reduziertem Berechnungsaufwand. Ein weiterer Vorzug des erfindungsgemäßen Ansatzes liegt darin, dass negative Einflüsse durch Störgrößen reduziert werden können. So kann das Verfahren entscheidend zur Optimierung der Betriebsstrategie, insbesondere eines Energiemanagements und einer Kraftstoffersparnis eines Hybridfahrzeugs, beitragen, wie nachfolgend noch im Rahmen der Ausführungsbeispiele detaillierter erläutert wird.

Gemäß einem Ausführungsbeispiel der Erfindung gibt die Systemgröße einen Geschwindigkeitsverlauf des Kraftfahrzeugs in einem vorausliegenden Streckenabschnitt an, der in Abhängigkeit von einem Höhenprofil des vorausliegenden Streckenabschnitts vorhergesagt wird. Neben dem Höhenprofil wird für die Prädiktion des Geschwindigkeitsverlaufs ferner ein Adaptionsfaktor benutzt, mit dem unterschiedliche Fahrweisen des Fahrers modelliert werden können.

Gemäß einem weiteren Ausführungsbeispiel weist das Kraftfahrzeug eine Stopp-Start-Automatik-Vorrichtung zur Ausbildung eines Stopp-Start-Betriebs auf, mittels derer die Brennkraftmaschine unter vorbestimmten Bedingungen automatisch abgeschaltet und gestartet werden kann. Die Systemgröße kann gemäß diesem Ausführungsbeispiel einen Ladezustand eines Energiespeichers für elektrische Energie angeben. Vorhersagt wird der elektrischen Energieverbrauch während der Stopp-Phasen und auf Basis dessen der Zielladezustand zu Beginn der Stopp-Phasen berechnet.

Der wenigstens eine Modellparameter, der verfahrensgemäß angepasst werden kann, kann dann beispielsweise eine durchschnittliche Dauer einer Stopp-Phase und/oder eine durchschnittliche elektrische Leistungsanforderung von über den Energiespeicher versorgten Nebenaggregaten während der Stopp-Phase angeben.

Es ist ferner vorteilhaft, den wenigstens einen Modellparameter nur anzupassen, wenn die - Abweichung zwischen prädizierter und tatsächlich gemessener Systemgröße einen Abweichungsschwellenwert überschreitet. Dadurch können unnötige Anpassungen des Modellparameters bei kleinen Abweichungen, die im Betrieb immer auftreten können, vermieden werden.

Eine einfach zu implementierende Möglichkeit der erfindungsgemäßen Realisierung sieht vor, dass der angepasste Modellparameter ein Korrekturfaktor, beispielsweise ein dimensionsloser Korrekturfaktor, ist.

Gemäß einem zweiten Gesichtspunkt der Erfindung wird eine Steuereinrichtung eines Kraftfahrzeugs, insbesondere eines Hybridfahrzeugs, bereitgestellt. Die Steuereinrichtung ist eingerichtet, eine Systemgröße eines Kraftfahrzeugs mit einer modellbasierten Prädiktion vorherzusagen, bei der ein Wert der Systemgröße auf Basis eines Systemmodells des Kraftfahrzeugs für einen vorausliegenden Streckenabschnitt in Abhängigkeit von mindestens einem Modellparameter vorhergesagt wird. Die Steuereinrichtung ist insbesondere eingerichtet, das Verfahren wie in diesem Dokument offenbart auszuführen. Zur Vermeidung von Wiederholungen sollen rein verfahrensgemäß offenbarte Merkmale auch als vorrichtungsgemäß offenbart gelten und beanspruchbar sein.

Die Erfindung betrifft ferner ein Kraftfahrzeug, insbesondere ein Nutzfahrzeug, mit einer solchen Steuervorrichtung.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügten Zeichnungen beschrieben. Es zeigen:
- Figur 1: eine schematische Darstellung des erfindungsgemäßen Verfahrens;
- Figur 2: eine schematische Darstellung des erfindungsgemäßen Verfahrens gemäß einer Ausführungsform der Erfindung; und
- Figur 3: eine Illustration einer weiteren Ausführungsform der Erfindung.

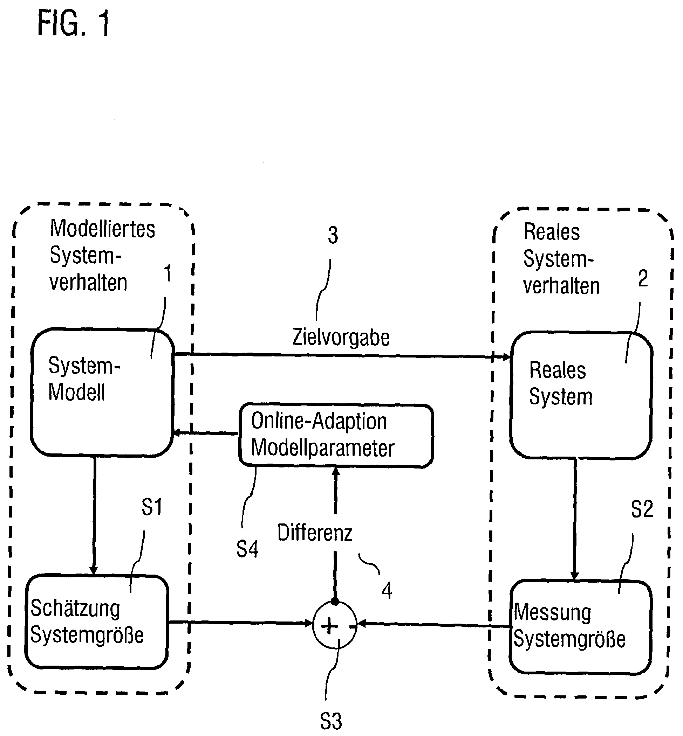

Figur 1 zeigt eine schematische Darstellung des erfindungsgemäßen Verfahrens gemäß einem Ausführungsbeispiel.

In einer Fahrzeugsteuerung, z.B. einer Fahrzeugsteuerung für das Energiemanagement des Fahrzeugs, ist ein Systemmodell 1 hinterlegt, mittels dessen ein Verhalten eines realen Fahrzeugsystems 2 durch Prädizierung einer oder mehrerer Systemgrößen vorhergesagt werden kann. Beispielsweise kann das Modell ausgebildet sein, eine vorausschauende Kalkulation von Energieerzeugung, -bedarf und -speicherung in einem hybridisierten Antriebsstrang vorzunehmen, was ein wesentlicher Bestandteil für die Optimierung des Energiemanagements der Antriebsaggregate eines Hybridfahrzeugs ist. Die Schätzung bzw. Vorhersage des Systemverhaltens kann hierbei auf Basis von vergangenen, aktuellen und/oder vorausschauenden Daten erfolgen.

Das Systemmodell 1 wird typischerweise im Rahmen eines Online-Optimierungsverfahrens verwendet, das zum Ziel hat, bestimmte Zustandsgrößen bzw. Systemzustände des Fahrzeugs, wie z.B. die Fahrzeuggeschwindigkeit oder den Ladezustand des Energiespeichers, stets in ein Optimum zu überführen. Das Optimum für einen prädizierten Zustandsverlauf ist durch eine Zielvorgabe 3, z.B. in Form von Zielkriterien, charakterisiert, z.B. die Minimierung des Kraftstoffverbrauchs.

Die genaue Ausführung des Systemmodells ist nicht Gegenstand der Erfindung und wird demzufolge hier nicht näher beschrieben. Prinzipiell ist die Erfindung auf jedes Systemmodell anwendbar, mit dem eine oder mehrere Systemgrößen in Abhängigkeit von Modellparametern und ggf. von vergangenen, aktuellen und/oder vorausschauenden Daten vorhergesagt (prädiziert) werden können.

Mit dem Systemmodell 1 wird somit im Betrieb des Fahrzeugs eine Systemgröße 1 geschätzt (prädiziert) (Schritt S1).

Ferner wird der tatsächliche Wert oder Verlauf der zuvor prädizierten Systemgröße gemessen (Schritt S2). Anschließend wird in Schritt S3 die Abweichung zwischen realem und prädiziertem Systemverhalten bestimmt, d. h. es wird die Differenz 4 zwischen dem prädizierten Wert der Systemgröße und dem gemessenen Wert der Systemgröße bestimmt.

Anschließend wird in Abhängigkeit von der Differenz 4 ein die Prädiktion der Systemgröße beeinflussender Modellparameter angepasst und für eine nachfolgende Prädiktion der Systemgröße verwendet. Hierbei wird der wenigstens eine Modellparameter so angepasst, dass der angepasste Modellparameter zu einer geringeren Abweichung des zuletzt prädizierten Werts vom zuletzt gemessenen Wert der Systemgröße geführt hätte.

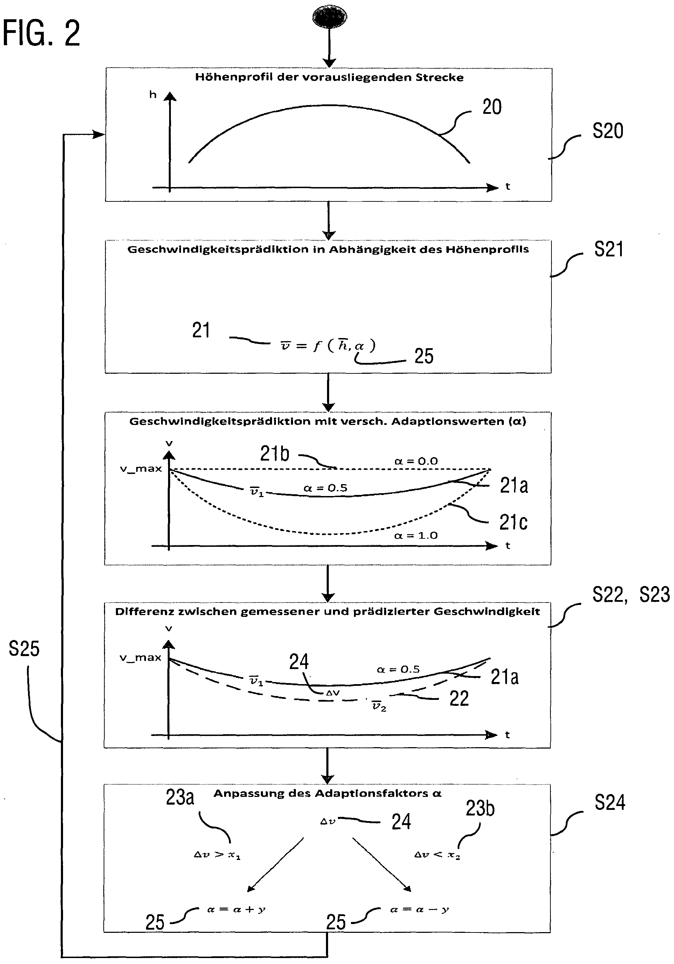

Figur 2 zeigt ein Beispiel, das die Anwendung der Online-Adaption des Modellparameters für die Schätzung der Fahrzeuggeschwindigkeit 21 eines Nutzfahrzeugs in einem vorausliegenden Streckenhorizont illustriert.

Hierfür werden zunächst in Schritt S20 für einen vorausliegenden Streckenabschnitt Daten ermittelt, die das Höhenprofil des vorausliegenden Streckenabschnitts, z. B. in Form von Steigungs- und Gefälleinformationen, angeben. Anschließend wird in Schritt S21 die Fahrzeuggeschwindigkeit 21 anhand einer Funktion f für den vorausliegenden Streckenabschnitt berechnet. Die Funktion f stellt in diesem Beispiel einen Teil des Systemmodells dar, um in Abhängigkeit von dem Höhenprofil des Streckenabschnitts und einem Modellparameter α (Bezugszeichen 25) und unter Berücksichtigung einer für Nutzfahrzeuge geltenden Maximalgeschwindigkeit v_max den Verlauf der Fahrgeschwindigkeit beim Durchfahren des Streckenabschnitts vorherzusagen.

Das Ergebnis der Prädiktion des Geschwindigkeitsverlaufs ist in dem mittleren Diagramm der Figur 2 in Form der Kurve 21a gezeigt. Zur Ermittlung der Kurve 21a wurde ein Wert von 0,5 für den Modellparameter α angenommen. Der Modellparameter α ist ein online, d. h. im Fahrbetrieb, parametrierbarer Faktor, mit dem unterschiedliche Fahrweisen parametriert werden können. Ein Wert von 0.0 für α gibt eine nicht ökonomische Fahrweise an, und ein Wert von 1.0 für α gibt eine maximal mögliche ökonomische Fahrweise an. Die gepunkteten Geschwindigkeitstrajektorien 21 b bzw. 21 c geben die Geschwindigkeitsverläufe an, die sich ergeben hätten, wenn ein Wert von 0.0 bzw. 1.0 für α zu Grunde gelegt worden wäre.

In Schritt S22 wird anschließend beim Durchfahren des vorausliegenden Streckenabschnitts der tatsächliche Verlauf 22 der Fahrzeuggeschwindigkeit gemessen und in Schritt S23 nach Durchfahren des Abschnitts mit dem prädizierten Verlauf 21a verglichen. Hierzu wird die Differenz ΔV aus prädiziertem Verlauf 21a und tatsächlichem Verlauf 22 der Geschwindigkeit gebildet. Je größer die Differenz, desto mehr unterscheidet sich der tatsächliche Fahrstil des Fahrers vom aktuell angenommenen Fahrstil in Form des Wertes 0,5 für den Parameter α.

Liegt die Abweichung Δv zwischen der berechneten (prädizierten) und der gemessenen Geschwindigkeit über einer vorbestimmten ersten Toleranzschwelle x1 (Bezugszeichen 23a), wird der aktuelle Wert 0.5 des Modellparameters α so korrigiert, dass der angepasste Modellparameter zu einer geringeren Abweichung des prädizierten Werts vom gemessenen Wert der Systemgröße geführt hätte. Im Beispiel der Figur 2 erfolgt die Korrektur des Modellparameters α über einen Adaptionswert y, der zum Modellparameter α addiert wird. Der Adaptionswert y kann beispielsweise als fester Parameter auf den Wert 0.1 festgelegt sein. Der adaptierte Wert für α wäre dann 0,6.

Liegt die Abweichung Δv zwischen der berechneten (prädizierten) und der gemessenen Geschwindigkeit dagegen unter einer vorbestimmten zweiten Toleranzschwelle x2 (Bezugszeichen 23b), wird der aktuelle Wert 0.5 des Modellparameters α korrigiert, indem der Adaptionswert y abgezogen wird. Der adaptierte Wert für den Modellparameter α wäre dann 0,4.

Werden die Toleranzschwellen x1, x2 nicht überschritten, erfolgt keine Adaption des Modellparameters α.

Dieses Verfahren wird dann erneut durchlaufen (dargestellt durch den Pfeil S25), wobei im nachfolgenden Durchlauf mit dem adaptierten Wert von 0,4 für α ein neuer Wert für die Systemgröße, hier des Geschwindigkeitsverlaufs, prädiziert wird. Das Verfahren wird während der Fahrt permanent wiederholt und somit die Adaption fortlaufend angepasst.

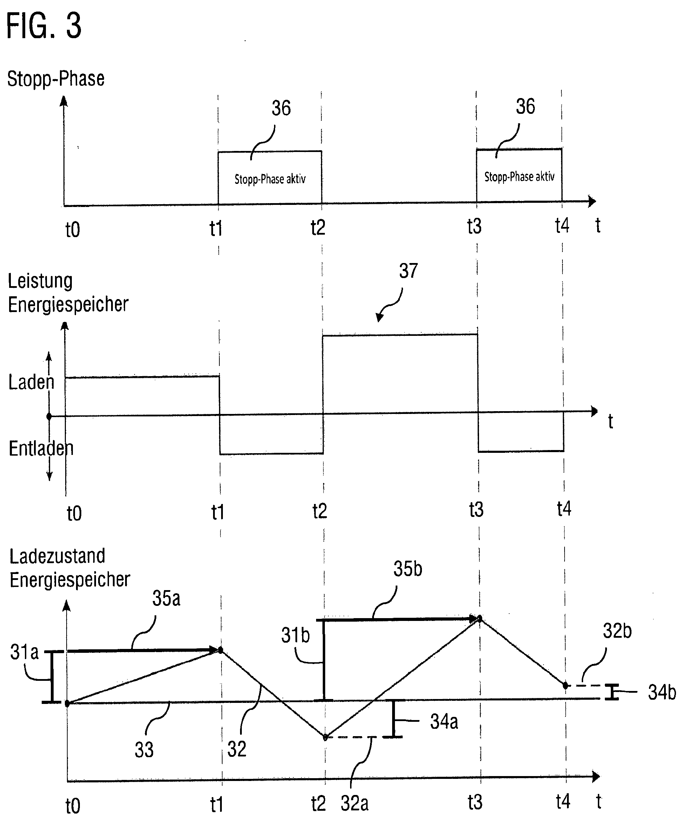

Die Diagramme in Figur 3 illustrieren ein weiteres Ausführungsbeispiel der Erfindung. Das Kraftfahrzeug, z. B. ein Omnibus, weist gemäß diesem Ausführungsbeispiel eine Stopp-Start-Automatik-Vorrichtung auf, mittels derer die Brennkraftmaschine unter vorbestimmten Bedingungen automatisch abgeschaltet und gestartet wird.

Um den Verbrennungsmotor des Omnibusses während einer Stopp-Phase (z. B. an einer Bushaltestelle) abschalten zu können, muss genügend Energie für die Versorgung der Nebenaggregate während dieser Phase zur Verfügung stehen.

Im oberen Diagramm der Figur sind die zwei Stopp-Phasen 36 beispielhaft dargestellt, jeweils von t1 bis t2 und von t3 bis t4.

Das mittlere Diagramm in Figur 3 gibt die Lade- bzw. Entladeleistung 37 des Energiespeichers im Zeitverlauf an. Das untere Diagramm in Figur 3 gibt den hierzu korrespondierenden Verlauf des Ladezustands des Energiespeichers im Zeitverlauf an. Die mit dem Bezugszeichen 33 gezeichnete Linie gibt die Höhe eines Soll-Ladezustands des Energiespeichers an, den dieser am Ende einer Stopp-Phase aufweisen soll. Die mit dem Bezugszeichen 32 gezeichnete Linie gibt den Verlauf des tatsächlichen Ladezustands des Energiespeichers im Zeitverlauf an.

Für die Umsetzung des Stopp-Start-Betriebs des Fahrzeugs wird im Zeitpunkt t0 der elektrische Energiebedarf 31a während der nächsten Stopp-Phase 36 von t1 bis t2 (z. B. an einer Bushaltestelle) auf Basis eines Systemmodells geschätzt. Als adaptierbare Modellparameter wird hierfür eine durchschnittliche Dauer einer Stopp-Phase oder eine durchschnittliche elektrische Leistungsanforderung von über den Energiespeicher versorgten Nebenaggregaten während der Stopp-Phase verwendet.

Vor Beginn der Stopp-Phase soll die benötigte Energie 31a, die während der Stopp-Phase mindestens benötigt wird, in den Energiespeicher geladen werden. Die Schätzung des Energiebedarfs dient als Zielvorgabe (dies entspricht einer Ladeleistungsvorgabe) für die Vorkonditionierung des Energiespeichers unmittelbar vor der Stopp-Phase. Die Ladeleistungsvorgabe ist schematisch dargestellt durch den Pfeil 35a. Folglich wird der Energiespeicher im Zeitintervall t0 bis t1 geladen, so dass der Ladezustand vom dem Soll-Ladezustandswert 33 um den Wert der prädizierten, während der Stopp-Phase benötigten Energie 31a ansteigt.

Während der Stopp-Phase wird nun der tatsächliche Energiebedarf gemessen und mit dem geschätzten Energiebedarf verglichen.

Im dargestellten Beispiel war der tatsächliche Energiebedarf in der Stopp-Phase von t1 bis t2 höher als der vorhergesagte, z.B. weil die Stopp-Phase länger dauerte als angenommen oder weil die durchschnittliche Leistungsanforderung der Nebenaggregate höher war als angenommen. Folglich ist der Ladezustand am Ende der Stopp-Phase unter den Soll-Ladezustand 33 auf den Wert 32a gefallen, so dass sich eine Differenz 34a zwischen vorhergesagtem und tatsächlichem Energieverbrauch ergibt.

Diese Abweichung der beiden Werte führt nun zu einer Adaption der Modellparameter, um die Abweichung zwischen geschätztem und realem Energieverbrauch zu minimieren. Für die darauffolgende Stopp-Phase wird nun der Energiebedarf auf Basis der adaptierten Funktionsparameter neu berechnet und eine neue (adaptierte) Zielvorgabe 35b für die Speicherkonditionierung definiert. Durch die Adaption des Systemmodells wird die Differenz (vgl. Abweichungen 34a und 34b) zwischen Soll-Ladezustand und dem aktuellen Ladezustand am Ende einer Stopp-Phase reduziert.

Obwohl die Erfindung unter Bezugnahme auf bestimmte Ausführungsbeispiele beschrieben worden ist, ist es für einen Fachmann ersichtlich, dass verschiedene Änderungen ausgeführt werden können und Äquivalente als Ersatz verwendet werden können, ohne den Bereich der Erfindung zu verlassen. Zusätzlich können viele Modifikationen ausgeführt werden, ohne den zugehörigen Bereich zu verlassen. Insbesondere ist die Erfindung nicht auf die dargestellten Beispiele für die Systemgrößen beschränkt. Folglich soll die Erfindung nicht auf die offenbarten Ausführungsbeispiele begrenzt sein, sondern soll alle Ausführungsbeispiele umfassen, die in den Bereich der beigefügten Patentansprüche fallen. Insbesondere beansprucht die Erfindung auch Schutz für den Gegenstand und die Merkmale der Unteransprüche unabhängig von den in Bezug genommenen Ansprüchen.

### Bezugszeichenliste

- 1: Systemmodell
- 2: Reales System
- 3: Zielvorgabe
- 4: Differenz aus prädizierter und gemessener Systemgröße
- 20: Höhenprofil
- 21: Berechnungsfunktion für Geschwindigkeit
- 21a: Prädizierter Geschwindigkeitsverlauf
- 21b, 21c: Alternative Geschwindigkeitsverläufe
- 22: Tatsächlicher Geschwindigkeitsverlauf
- 23a, 23b: Abweichungsschwellenwerte
- 24: Abweichung des prädizierten vom tatsächlichen Geschwindigkeitsverlauf
- 25: Modellparameter
- 31a: Prädizierter Energiebedarf in Stopp-Phasen
- 32: Tatsächlicher Verlauf des Ladezustands des Energiespeichers
- 32a, 32b: Tatsächlicher Ladezustand am Ende der ersten Stopp-Phase
- 33: Soll-Ladezustand
- 34a, 34b: Abweichung des prädizierten vom tatsächlichen Ladezustand
- 35a, 35b: Ladeleistungsvorgabe
- 36: Stopp-Phase
- 37: Lade- bzw. Entladeleistung im Zeitverlauf

## Patentansprüche

1. Verfahren zur modellbasierten Prädiktion einer Systemgröße eines Kraftfahrzeugs, insbesondere eines Hybridfahrzeugs, bei dem ein Wert oder Verlauf (21 a; 31a, 31b) der Systemgröße auf Basis eines Systemmodells für einen vorausliegenden Streckenabschnitt in Abhängigkeit von mindestens einem Modellparameter vorhergesagt wird (S1; S21),
**dadurch gekennzeichnet,**
**dass** ein tatsächlicher Wert oder Verlauf (22; 32a, 32b) der zuvor prädizierten Systemgröße gemessen wird (S2; S22), und
**dass** in Abhängigkeit von einer Abweichung (4; 24; 34a, 34b) des prädizierten Werts (21 a; 31a, 31b) vom gemessenen Wert (22; 32a, 32b) der Systemgröße wenigstens ein die Prädiktion der Systemgröße beeinflussender Modellparameter (25) angepasst (S4; S24) und für eine nachfolgende Prädiktion der Systemgröße verwendet wird, wobei der wenigstens eine Modellparameter so angepasst wird, dass der angepasste Modellparameter zu einer geringeren Abweichung des prädizierten Werts vom gemessenen Wert der Systemgröße geführt hätte.

2. Verfahren nach Anspruch 1, **dadurch gekennzeichnet, dass** die Systemgröße ein Geschwindigkeitsverlauf (21) des Kraftfahrzeugs in einem vorausliegendem Streckenabschnitt angibt, der in Abhängigkeit von einem Höhenprofil (20) des vorausliegenden Streckenabschnitts vorhergesagt wird.

3. Verfahren nach Anspruch 1 oder 2, **dadurch gekennzeichnet, dass** das Kraftfahrzeug eine Stopp-Start-Automatik-Vorrichtung aufweist, mittels derer die Brennkraftmaschine unter vorbestimmten Bedingungen automatisch abgeschaltet und gestartet werden kann, wobei die Systemgröße einen elektrischen Energieverbrauch (32) während einer Stopp-Phase oder einen Ladezustand eines Energiespeichers für elektrische Energie zu Beginn und/oder am Ende der Stopp-Phase angibt.

4. Verfahren nach Anspruch 3, **dadurch gekennzeichnet, dass** der wenigstens eine anpassbare Modellparameter eine durchschnittliche Dauer einer Stopp-Phase oder eine durchschnittliche elektrische Leistungsanforderung von über den Energiespeicher versorgten Nebenaggregaten während der Stopp-Phase angibt.

5. Verfahren nach einem der vorhergehenden Ansprüche, **dadurch gekennzeichnet, dass** der wenigstens eine Modellparameter nur angepasst wird, wenn die Abweichung zwischen prädizierter und tatsächlich gemessener Systemgröße einen Abweichungsschwellenwert (23a, 23b) überschreitet.

6. Verfahren nach einem der vorhergehenden Ansprüche, **dadurch gekennzeichnet, dass** der angepasste Modellparameter ein Korrekturfaktor (25) ist.

7. Steuereinrichtung eines Kraftfahrzeugs, insbesondere eines Hybridfahrzeugs, die eingerichtet ist, eine Systemgröße eines Kraftfahrzeugs mit einer modellbasierten Prädiktion vorherzusagen, bei der ein Wert der Systemgröße auf Basis eines Systemmodells des Kraftfahrzeugs für einen vorausliegenden Streckenabschnitt in Abhängigkeit von mindestens einem Modellparameter vorhergesagt wird,
**dadurch gekennzeichnet,**
**dass** die Steuereinrichtung eingerichtet ist, das Verfahren nach einem der vorhergehenden Ansprüche auszuführen.

8. Kraftfahrzeug, insbesondere Nutzfahrzeug, aufweisend eine Steuervorrichtung nach Anspruch 7.
